# EUROPEAN PATENT APPLICATION

(11) **EP 4 773 427 A1**
(43) Date of publication of application: **08.07.2026**
(21) Application number: 25822447.6
(22) Date of filing: 31.03.2025
(51) Int. Cl.: H01M 50/59, H01M 50/588, H01M 50/507, H01M 50/502, H01M 10/04, H01M 50/503

(54) **BATTERY MODULE AND BATTERY PACK COMPRISING SAME**

(30) Priority: 14.06.2024 KR 20240077556
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2025/004160
(87) International publication number: WO 2025/258817

(57) **Abstract**

A battery module according to an embodiment includes: a battery cell laminate that is formed by stacking a plurality of battery cells; and a busbar frame that covers at least one surface of the battery cell laminate, and on which at least two terminal busbars electrically connected to the battery cell laminate are mounted, wherein the terminal busbar includes at least one combining slit for electrical connection with external configuration.

## Description

### [Technical Field]

### CROSS-REFERENCE TO RELATED APPLICATION(S)

This application claims priority to and the benefit of Korean Patent Application No. 10-2024-0077556 filed with the Korean Intellectual Property Office on June 14, 2024, the entire contents of which are incorporated herein by reference.

The present invention relates to a battery module and a battery pack including the same, and more particularly it relates to a battery module that facilitates electrical connection between modules and improves safety by preventing inter-busbars from gathering in one place when configuring a battery pack, and a battery pack including the same.

### [Background Art]

In modern society, as the use of a portable device such as a mobile phone, a laptop, a camcorder, and a digital camera has become commonplace, the development of technologies related to the above mobile device is becoming active. In addition, a rechargeable battery that can be repeatedly charged and discharged is being used as a power source for an electric vehicle (EV), a hybrid electric vehicle (HEV), a plug-in hybrid electric vehicle (P-HEV), and the like as a solution to the air pollution problem caused by existing gasoline vehicles that use fossil fuel, and the need for development of the rechargeable battery is increasing.

A currently commercially available rechargeable battery includes a nickel cadmium battery, a nickel hydrogen battery, a nickel zinc battery, and a lithium rechargeable battery. Among these, the lithium rechargeable battery is receiving attention due to its merits of being free from memory effect compared to the nickel-based rechargeable battery, being able to charge and discharge freely, having a very low self-discharge rate, and having high energy density.

Such a lithium rechargeable battery mainly uses a lithium-based oxide and a carbon material as a positive electrode active material and a negative electrode active material, respectively. The lithium rechargeable battery includes an electrode assembly in which a positive electrode plate and a negative electrode plate, each of which is coated with a positive electrode active material and a negative electrode active material, are disposed with a separator between them, and a battery case that seals and accommodates the electrode assembly together with an electrolyte.

In general, a lithium rechargeable battery can be classified into a can-type rechargeable battery in which an electrode assembly is built into a metal can and a pouch-type rechargeable battery in which an electrode assembly is built into a pouch made of an aluminum laminate sheet, depending on the shape of the outer packaging material.

In the case of a rechargeable battery used in a small device, two or three battery cells are arranged, but in the case of a rechargeable battery used in a medium to large device such as a vehicle, a battery module with a plurality of battery cells that are electrically connected with each other is used. Such a battery module has improved capacity and output by forming a battery cell laminate with a plurality of battery cells connected in series or coupled in parallel. One or more battery modules can be mounted together with various control and protection systems, such as a battery management system (BMS), a power disconnect unit (BDU), and a cooling system, to form a battery pack.

A battery pack includes a battery module as its sub-concept, and a battery module includes a battery cell as its sub-concept. In addition, the number of battery cells in a battery module or the number of battery modules in a battery pack may be determined in various ways depending on the output or capacity of the battery pack required for the electric vehicle.

However, in the case of such a battery pack, one of the most important issues is safety. In particular, when a thermal event occurs in one of the plurality of battery cells included in the battery pack, it is necessary to block the propagation of the thermal event to other battery cells and modules.

When thermal propagation between battery cells and modules is not properly suppressed, it may lead to thermal events in other battery cells in the battery pack, which can cause bigger problems such as ignition or explosion of the battery pack. In particular, when thermal runaway occurs, the discharge may fly and settle at a specific point, causing an internal short circuit. When the corresponding part is a portion where a high-voltage current flows, even greater damage may occur. Therefore, a configuration that can prevent this from the beginning is required.

### [Disclosure]

### [Technical Problem]

The task that the present invention seeks to solve is to provide a battery module that can simplify a manufacturing process when configuring a battery pack simultaneously minimizing damage that may be caused by discharge and the like, caused by thermal runaway, and a battery pack including the same.

However, the tasks that embodiments of the present invention seek to solve are not limited to the tasks described above, and can be described in various ways within the scope of technical ideas included in the present invention.

### [Technical Solution]

A battery module according to an embodiment includes: a battery cell laminate that is formed by stacking a plurality of battery cells; and a busbar frame that covers at least one surface of the battery cell laminate, and on which at least two terminal busbars electrically connected to the battery cell laminate are mounted, wherein the terminal busbar includes at least one combining slit for electrical connection with the external configuration.

The battery module may further include a module frame that accommodate the battery cell lamination to which the busbar frame is combined and including an opening that exposes two lateral ends of the battery cell laminate in a length direction;
a pair of end plates, combined to the opening and including a terminal expose hole that is exposes the at least two terminal busbars,
, wherein the terminal expose hole may be provided in each of the pair of end plates.

The terminal busbar may be a positive terminal busbar and a negative terminal busbar, and the positive terminal busbar and the negative terminal busbar may be respectively arranged at the diagonal direction ends of an upper surface of the module frame assembly.

The terminal expose hole may be provided with one on each pair of end plates.

The terminal busbar includes a main body that is parallel to one side of the busbar frame and is fixed to the busbar frame, and a connection portion that extends vertically from an upper side of the main body, and the combining slit may be formed in the connection portion.

The battery module may further include a sub-combining slit extending in a direction perpendicular to an extension direction of the combining slit.

A battery pack according to an embodiment includes: a plurality of battery modules; and a pack housing that accommodates the battery module, wherein at least one of the plurality of battery module is the above-stated battery module.

The battery pack may include an inter busbar that electrically connects the terminal busbars of adjacent battery modules among the plurality of battery modules.

The inter busbar may include a bar-shaped inter busbar body and an insulating member covering the remaining portion of the inter busbar body except for two lateral ends.

The two lateral ends of the inter busbar body may be inserted into the combining slit of the battery module, respectively.

The battery pack may further include an insulating finish that covers the two lateral ends and the combining slit while the two lateral ends are inserted into the combining slit.

The insulating finish may contain heat-resistant silicone.

In at least one battery module among the plurality of battery modules, the terminal busbar may be a positive terminal busbar and a negative terminal busbar, and the positive terminal busbar and the negative terminal busbar may be respectively arranged at the diagonal direction ends of an upper surface of the module frame assembly.

The plurality of battery modules may be arranged adjacently in the row direction and column direction, and a plurality of inter busbars connecting the plurality of battery modules may be arranged so as not to be adjacent to each other in the column direction.

### [Advantageous Effects]

According to the embodiments of the present invention, when a thermal event occurs in a specific battery cell or battery module and discharge occurs, damage that may occur when the discharge comes into contact with a component where high voltage electricity flows can be minimized, and a manufacturing process when forming a battery pack can be simplified at the same time.

The effects of the present invention are not limited to those mentioned above, and other effects not mentioned will be clearly understood by a person of ordinary skill in the art from the description of the scope of the claims.

### [Description of the Drawings]

FIG. 1 is a perspective view of a battery module according to an embodiment.
FIG. 2 is an enlarged perspective view of the part A of FIG. 1.
FIG. 3 is a perspective view of the decomposition of an assembled portion of an end plate and a busbar frame in FIG. 1.
FIG. 4 shows a top surface of the battery module of FIG. 1.
FIG. 5 shows a front surface of the battery module of FIG. 1.
FIG. 6 shows a portion corresponding to the battery module of FIG. 2 according to a modified example of the present invention.
FIG. 7 is a top plan view illustrating a simplified battery pack according to another embodiment of the present invention.
FIG. 8 is a top plan view illustrating a simplified battery pack according to a modified example of the present invention.
FIG. 9 is an enlarged perspective view of the part B of FIG. 7.
FIG. 10 is a perspective view of an inter busbar of FIG. 9.
FIG. 11 is a top view that shows a connection state of the inter busbar and a terminal busbar in FIG. 9.

### [Mode for Invention]

Hereinafter, with reference to the accompanying drawing, various embodiments of the present invention are described in detail and thus a person of ordinary skill in the technical field to which the present invention belongs can easily practice them. The present invention may be implemented in many different forms and is not limited to the embodiments described herein.

In order to clearly describe the present invention, parts that are not related to the description have been omitted, and the same reference symbols are used for identical or similar components throughout the specification.

In addition, the size and thickness of each component shown in the drawing are arbitrarily shown for better understanding and ease of description, and therefore the present invention is not necessarily limited to what is shown. In the drawings, the thickness of layers, films, panels, regions, etc., are exaggerated for clarity. In addition, in the drawing, for better understanding and ease of description, the thickness of some layers and regions is exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, throughout the specification, the word "on" a target element will be understood to be positioned above or below the target element, and will not necessarily be understood to be positioned "at an upper side" based on an opposite to gravity direction.

In addition, unless explicitly described to the contrary, the word "comprise", and variations such as "comprises" or "comprising", will be understood to imply the inclusion of stated elements but not the exclusion of any other elements.

Further, throughout the specification, the phrase "on a plane" means viewing a target portion from the top, and the phrase "on a cross-section" means viewing a cross-section formed by vertically cutting a target portion from the side.

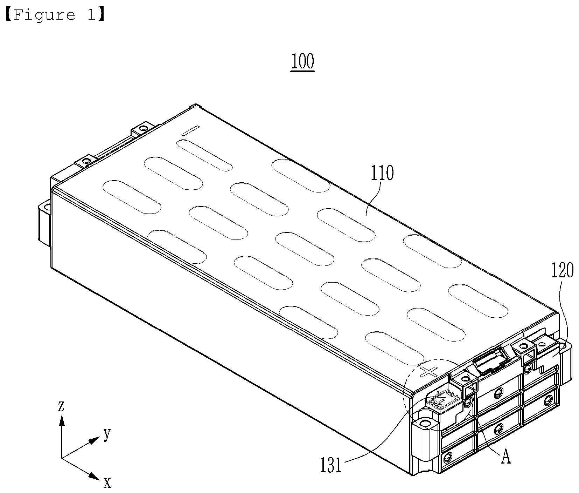

Hereinafter, referring to FIG. 1 to FIG. 5, a battery module according to an embodiment will be described.

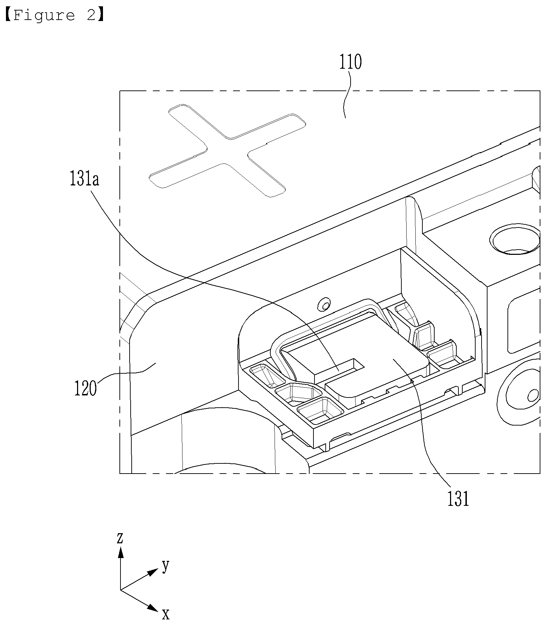

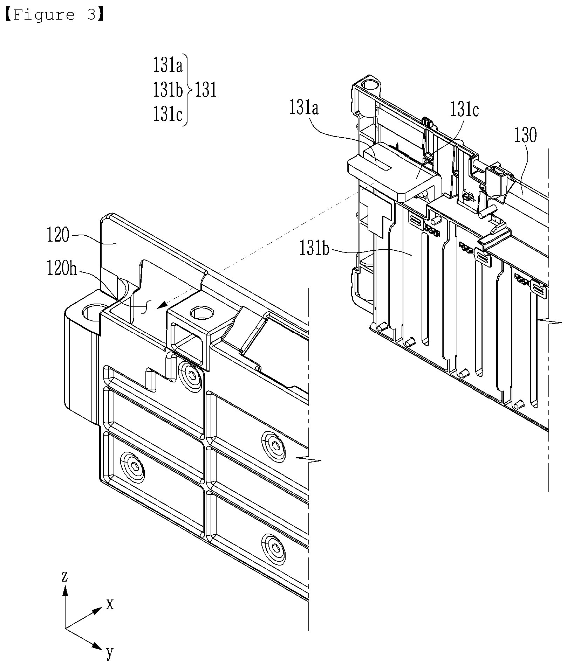

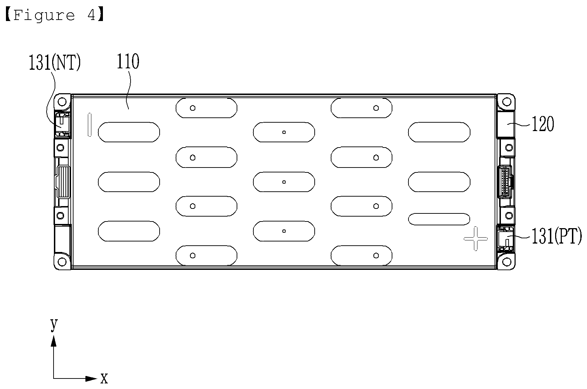

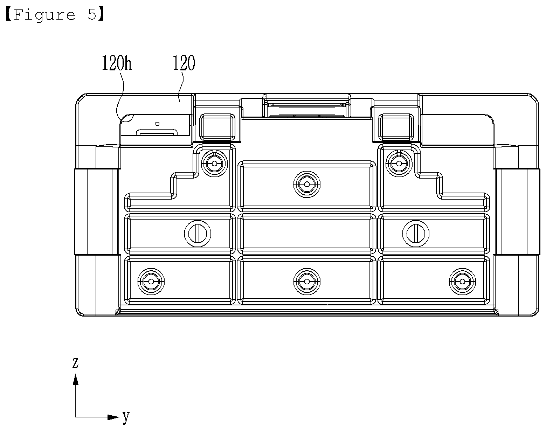

FIG. 1 is a perspective view of a battery module according to an embodiment. FIG. 2 is an enlarged perspective view of the part A of FIG. 1. FIG. 3 is a perspective view of the decomposition of an assembled portion of an end plate and a busbar frame in FIG. 1. FIG. 4 shows a top surface of the battery module of FIG. 1. FIG. 5 shows a front surface of the battery module of FIG. 1.

Referring to FIG. 1 to FIG. 5, a battery module 100 according to the present embodiment includes a battery cell laminate (not shown) formed of a plurality of battery cells stacked on each other; a busbar frame 130 covering at least one side of the battery cell laminate, and on which at least two terminal busbars 131 electrically connected to the battery cell laminate are mounted, and a module frame 110 and an end plate 120 accommodating the battery cell laminate in combination with the busbar frame 130.

For example, the module frame 110 may have a mono frame shape in a rectangular shape that surrounds the top, bottom, and sides of the battery cell laminate. However, the shape of the module frame 110 is not limited thereto, and the module frame 110 may be formed by including an upper plate covering an upper portion of the battery cell laminate, an upper surface, and a U-shaped frame with open front and rear sides, or may be replaced with a frame of a different shape, such as a combination of a lower plate, a bottom surface, and an inverted U-shaped frame with open front and back. The module frame 110 may include a metal material having a predetermined strength to protect the battery cell laminate, the busbar frame 130, and other electrical components from the outside. Meanwhile, in the present embodiment, a battery module including the module frame 110 has been described, but the present disclosure is not limited thereto, and when forming a battery pack, which will be described later, a moduleless type in which a battery cell laminate and a busbar frame are combined to directly form a battery pack without including a module frame may be used, and is not particularly limited thereto.

A plurality of battery cells forming a battery cell laminate may be pouch-type battery cells, but is not limited thereto and various forms of battery cells may be applied. A plurality of battery cells are stacked such that they can be electrically connected to each other to form a battery cell laminate. For example, in FIG. 1, the plurality of battery cells are stacked such that electrode leads are aligned in the x-axis direction. The aligned electrode leads may be protruded through openings in the module frame 110 formed at both ends in the x-axis direction and coupled to the busbar frame 130 at the corresponding portions. That is, the busbar frame 130 may be disposed on a front (side in the x-axis direction) and a back (side in the -x-axis direction) of the battery cell laminate. However, this is an exemplary arrangement, and the position of the bus bar frame 130 is not limited thereto, and may be arranged to cover the other side of the battery cell laminate. That is, the position of the busbar frame 130 may be appropriately changed when a position is such that electrical connection between the electrode leads and the busbar is possible along the protruding direction of the electrode leads, and is not particularly limited.

The end plate 120 is formed on the outer side of the busbar frame 130. The end plate 120 may protect the busbar frame 130 and various electrical components connected thereto from external impact, have a battery module mounting structure that can mount the battery module 100 to a battery pack, and simultaneously allow the terminal busbar 131 to protrude to the outside through an open portion formed in the end plate 120, thereby guiding an electrical connection between the busbar frame 130 and an external power source.

Referring to FIG. 2 and FIG. 3, a plurality of busbars including a terminal busbar 131 may be mounted on one side of the busbar frame 130. Electrical connection between battery cells and electrical connection with the external components of the battery module may be achieved by the plurality of bus bars. In this case, a surface on which the plurality of busbars are mounted may be the opposite side facing the battery cell laminate, that is an exterior side, and with the busbars mounted, the end plate 120 may be combined with the module frame 110 to cover the mount surface of the busbars, thereby completing the module frame assembly.

The terminal busbar 131 may be installed at one end of the busbar frame 130 in a width direction. In the present embodiment, the terminal busbar 131 may be installed only once per busbar frame 130, and may be configured to protrude in the diagonal direction of the module frame 110 when viewed from the top of the battery module 100 as described below.

The terminal busbar 131 includes a main body 131b that is fixed to the busbar frame 130 and electrically connected with the battery cell, and a connection portion 131c, which is vertically extended to the outside from an upper end of the main body 131b, that is, an upper end of the main body 131b in the z-axis direction. In the present embodiment, a shape in which a slit is formed in the main body 131b and connected to the battery cell is illustrated as an example, but the present invention is not limited thereto and electrical connection may be established using various methods.

The connection portion 131c extends outwardly, that is, in the x-axis direction in the drawing, toward the end plate 120 and protrudes toward the outside of the battery module 100 through a terminal expose hole 120h formed in the end plate 120. The connection portion 131c becomes a part that forms an electrical connection between adjacent battery modules when configuring a battery pack as described later.

At least one combining slit 131a for electrical connection is formed in the connection portion 131c. The combining slit 131a may be a groove formed in the connection portion 131c and open toward the outside. Since an inter busbar that serves for electrical connection between battery modules100 when configuring a battery pack is inserted into the combining slit 131a, as described later, a width of the combining slit 131a may be formed to correspond to an end thickness of the inter busbar. An elongation direction of the combining slit 131a may be, as shown in FIG. 2, the y-axis direction, and may be open toward the outside of the end plate 120, but is not limited thereto, and may also be extended and opened along the x-axis direction toward the outside.

When bonding the inter-busbar through such a slit-shaped combining slit 131a, the configuration and process may be simplified compared to a conventional terminal busbar that establishes electrical connection through a a bolt and nut. That is, in the conventional structure, alignment between holes formed in a bolt, a nut, and a terminal busbar was required for electrical connection, and holes formed in the inter-busbar also needed to be aligned and combined. In addition, a separate space for inserting the nut needed to be provided in the busbar frame. In addition, there was a problem that a connection portion of the terminal busbar and a width of the inter-busbar had to be widened to ensure a sufficient width for the bolt insertion. However, when connecting the inter busbars through the combining slit 131a as in the present embodiment, the configuration of the terminal busbar 131 and a configuration required for the connection can be simplified, the width of the inter busbar may be formed small, and the connection process may also be simplified without a complicated alignment process.

As shown in FIG. 3, the terminal expose hole 120h is formed in the end plate 120 and thus when the end plate 120 is combined to the busbar frame 130, the connection portion 131c of the terminal busbar 131 may be exposed to the outside. In this case, an insulating cover for insulation may be further disposed between the end plate 120 and the busbar frame 130, or an insulating coating may be formed on the inside of the end plate 120 for insulation, but this is not particularly limited.

In the present embodiment, as shown in FIG. 5, the terminal expose hole 120h may not be formed on both sides of the width direction (y-axis direction) of the end plate 120, but may be formed on only one side. That is, with one end plate 120, only one terminal busbar 131 is exposed. Thus, as shown in FIG. 4, two terminal busbars 131 may be formed so as to be exposed to each end of the diagonal direction of the module frame 110 when viewed from the top surface of the battery module 100. In this case, the terminal busbars 131 may be a positive terminal busbar PT and a negative terminal busbar NT, respectively. According to such a configuration, since the two terminal busbars 131 are not exposed to one end plate 120 but are each exposed at the farthest end, that is, the end in the diagonal direction, not only a short circuit between them can be prevented, but also, as described later, when configuring a battery pack, the busbars can be prevented from being concentrated in a narrow space, thereby further improving safety.

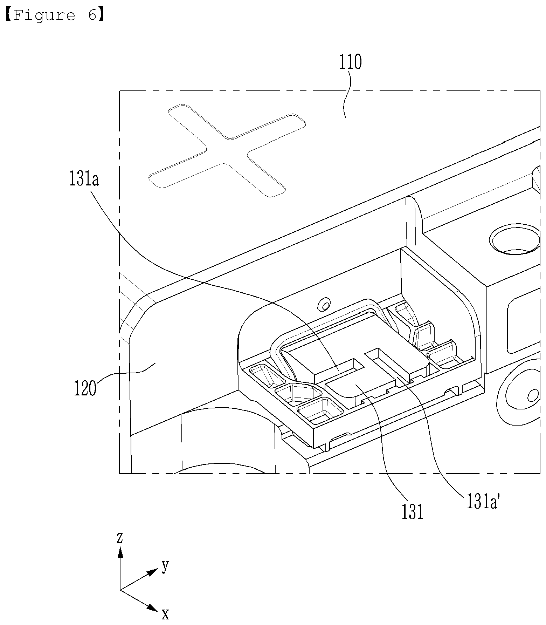

Hereinafter, further referring to FIG. 6, a battery module according to a modified example of the present invention will be described.

FIG. 6 shows a portion of a battery module according to a modified example, corresponding to FIG. 2.

As shown in FIG. 6, in a modified example of the present invention, a sub-combining slit 131a' is further included in the terminal busbar 131 in addition to the combining slit 131a. The sub-combining slit 131a' may be extended in a direction perpendicular to the elongation direction of the combining slit 131a, and may be formed to be open at an end in a direction perpendicular to the open direction of the combining slit 131a. For example, as shown in FIG. 6, when the combining slit 131a is formed to extend in the y-axis direction and open at the end in the y-axis direction, the sub-combining slit 131a' can be formed to extend in the x-axis direction and open at the x-axis direction end.

In the case of further including the sub-combining slit 131a', the inter busbars may be mounted in both the row direction and the column direction without any restrictions on the combining direction of the inter busbars when configuring the battery pack, which will be described later.

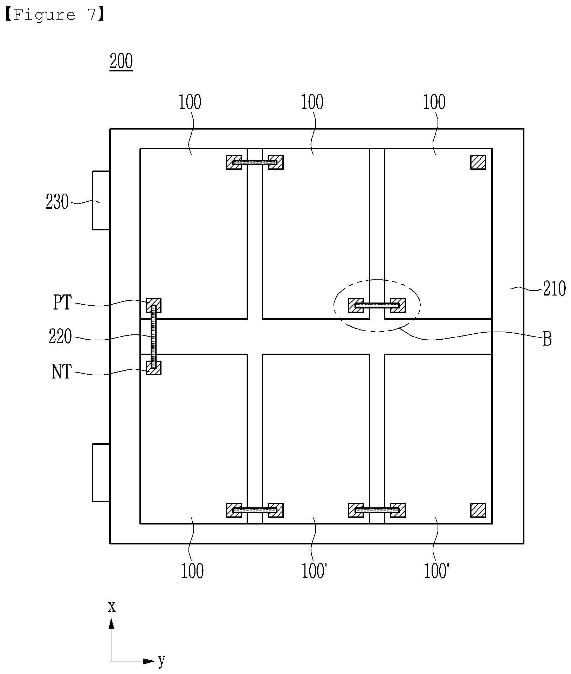

Hereinafter, referring to FIG. 7 to FIG. 11, a battery pack according to another embodiment and a battery pack according to modified example will be described.

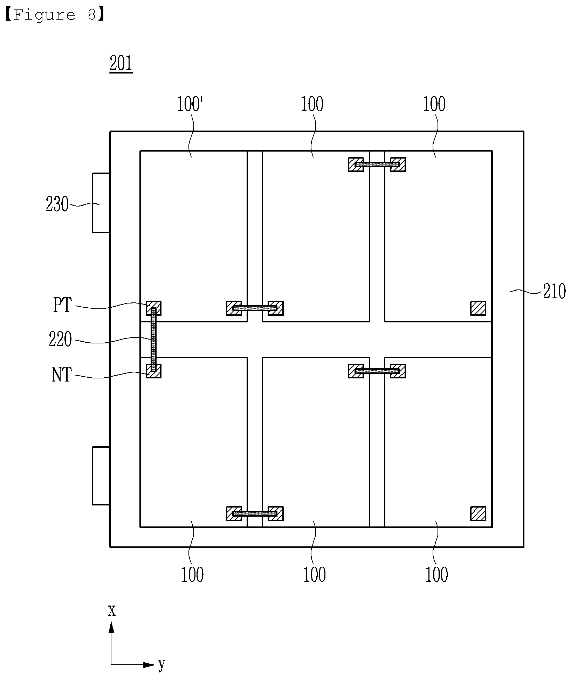

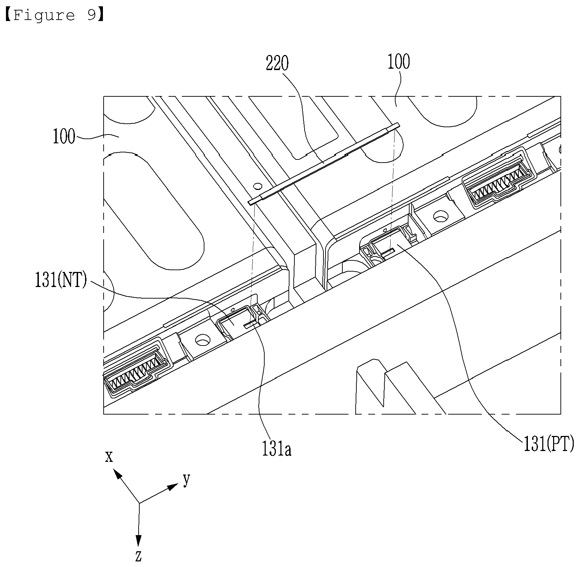

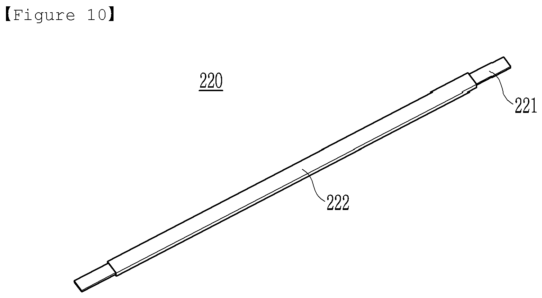

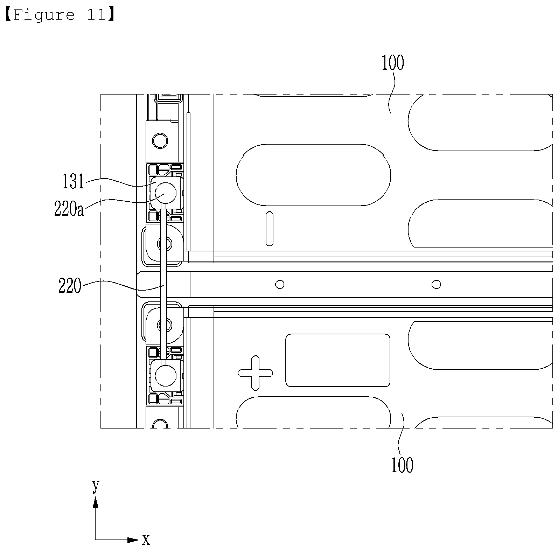

FIG. 7 is a top plan view illustrating a simplified battery pack according to another embodiment of the present invention. FIG. 8 is a top plan view illustrating a simplified battery pack according to a modified example of the present invention. FIG. 9 is an enlarged perspective view of the portion B in FIG. 7. FIG. 10 is a perspective view of an inter busbar of FIG. 9. FIG. 11 is a top view illustrating a connection state of the inter busbar and a terminal busbar in FIG. 9.

Referring to FIG. 7, a battery pack 200 according to an embodiment may include a plurality of battery modules 100 including the above-described battery module 100, a pack housing 210 that accommodates the plurality of battery modules 100, exhaust devices 230, and an inter busbar 220.

The pack housing 210 may include a flat-shaped base plate and side walls extending vertically from the base plate to form a space for accommodating the battery module 100, but is not particularly limited thereto.

The exhaust devices 230 may be combined to any one of the side walls of the pack housing 210, and the side wall combined with the exhaust devices 230 may include an exhaust route connected to the exhaust devices 230. The exhaust devices 230 may be configured to delay thermal propagation by releasing high temperature gas inside the battery pack 200 to the outside when any one of the battery modules 100 is in a thermal runaway state.

In the pack housing 210, the plurality of battery modules 100 are arranged adjacently in the row and column directions. Each battery module 100 includes a positive terminal busbar PT and a negative terminal busbar NT. The positive terminal busbar PT and the negative terminal busbar NT correspond to the configuration of the terminal busbar 131 of battery module 100 described above. In particular, at least one battery module 100 may be a battery module 100 in which a positive terminal busbar PT and a negative terminal busbar NT are respectively arranged at the ends of the battery module 100 in a diagonal direction.

The positive terminal busbar PT of the battery module 100 is electrically connected to the negative terminal busbar NT of the neighboring battery module 10. In this case, an electrical connection between the positive terminal busbar PT and the negative terminal busbar NT may be established via the inter busbar 220. The electrical connection may be established by inserting the inter busbar 220 into the combining slits 131a formed on the positive terminal busbar PT and the negative terminal busbar NT.

That is, referring to FIG. 9 and FIG. 10, the inter busbar 220 is formed in a bar shape and is combined such that both ends are inserted into the combining slits 131a of the positive terminal busbars 131 (PT) and the negative terminal busbar 131 (NT), respectively, thereby electrically connecting the neighboring battery modules 100. Specifically, as shown in FIG. 10, the inter busbar 220 may include an inter busbar body 221 formed in a bar shape and an insulating member 222 covering the remaining portion except for both ends of the inter busbar body 221. The inter busbar body 221 may be formed of a conductive material such as a metal for electrical connection. The insulating member 222 may be formed of an insulating material, for example, a resin such as polybutylene terephthyl acetate (PBT) to prevent current conduction in a part that is in contact with other components of the battery pack. The ends of the inter busbar bodies 221, which are not covered by the insulating members 222, may be inserted into the combining slits 131a of the positive terminal busbar 131 (PT) and the negative terminal busbar 131 (NT), respectively, to electrically connect the neighboring battery modules 100. In this case, since the configuration for combining is the combining slit 131a as described above, the process can be performed very simply by only inserting the end of the bar-shaped inter busbar 220, compared to the conventional case where electrical bonding was established by nut and bolt bonding to the hole. In addition, since the inter busbar 220 only needs to have a thickness that can be inserted into the combining slit 131a, and a width does not need to be thickened to secure a space for forming the bolt insertion hole, the inter busbar 220 may be formed thin, and thus, a sufficient separation distance from surrounding components can be secured. By ensuring a sufficient separation distance, it is possible to a prevent short circuit due to contact, and also to significantly reduce the probability of a short circuit occurring due to contact with the inter busbar 220 when discharge occurs due to thermal runaway. Accordingly, the safety of the battery pack 200 can be improved.

Meanwhile, referring to FIG. 11, after the inter busbar 220 is inserted into each combining slit 131a, an insulating finish 220a may be further formed on the inter busbar 220 and the combining slit 131a. The insulating finish 220a may be formed of a heat-resistant material, for example, it may contain refractory silicon. By applying the insulating finish 220a, it is possible to prevent the inter busbar 220 from falling off, and at the same time, since the insulating finish 220a has fire resistance characteristics, the end of the inter busbar 220 and the terminal busbar 131 can be protected when thermal runaway occurs.

As described, in the battery pack 200 according to an embodiment, since electrical connection is established between the battery modules 100 including the combining slits 131a through the bar-shaped inter busbar 220, the electrical connection process can be simplified, and also, a sufficient separation distance from surrounding components can be secured and the probability of contact with discharged materials can be reduced, thereby preventing the occurrence of a short circuit and improving safety.

Referring back to FIG. 7, in the battery pack 200 according to an embodiment, since at least one battery module 100 has a structure in which the positive terminal busbar PT and the negative terminal busbar NT are arranged at each of the diagonal ends of the battery module 100, as shown in FIG. 7, it is possible to prevent the inter busbars 220 for electrical connection from being concentrated in any one part.

That is, since, conventionally, only the battery modules 100' with the positive terminal busbar PT and the negative terminal busbar NT arranged in one direction are arranged to form the battery pack 200, the inter busbars 220 for connecting the battery packs 200 also have to be concentrated in one part. However, according to an embodiment, as shown in FIG. 7, the arrangement position of the inter busbar 220 can be dispersed by appropriately mixing and arranging the battery modules 100 in which the positive terminal busbar PT and the negative terminal busbar NT are arranged at both ends in the diagonal direction,

In particular, in a configuration where the battery modules 100 are arranged in the row direction and the column direction, the inter busbars 220 may not be arranged adjacently in the column direction (x-axis direction). In addition, even if only one battery module 100' having a positive terminal busbar PT and a negative terminal busbar NT is arranged, such as the battery pack 201 of FIG. 8, which is a modified example, is arranged, by configuring another battery module 100 adjacent to the corresponding module as the battery module 100 having the positive terminal busbar PT and the negative terminal busbar NT arranged at both ends in the diagonal direction, a configuration in which the inter busbars 220 are not arranged adjacently in the column direction, i.e., a configuration in which inter busbars 220 do not face each other in the column direction, may be obtained.

Through this arrangement, compared to the case where the inter busbars 220 are arranged in a concentrated manner, even if the discharge reaches a certain point during thermal runaway, the probability of contact with the inter busbar 220 is minimized, and the possibility of contact with a plurality of inter busbars 220 is blocked, thereby reducing the probability of an internal short circuit occurring and thus the probability of flame occurrence can also be reduced. Therefore, the safety of the battery pack can be improved.

In the present embodiment, terms indicating directions such as front, back, left, right, up, and down are used, but these terms are only for better understanding and ease of description, and may vary depending on the position of the object in question or the position of the observer.

The battery module or the battery pack may be applied to various devices. Specifically, the battery module or the battery pack may be applied to transportation means such as an electric bicycle, an electric vehicle, a hybrid, and the like, or an energy storage system (ESS), but is not limited thereto, and may be applied to various devices that can use the rechargeable battery.

While this invention has been described in connection with what is presently considered to be preferable embodiments, it is to be understood that the invention is not limited to the disclosed embodiments. On the contrary, it is intended to cover various modifications and equivalent arrangements included within the spirit and scope of the appended claims.

### [Description of Symbols]

100: battery module
110: module frame
120: end plate
130: busbar frame
131: terminal busbar
131a: combining slit
200: battery pack
210: pack frame
220: inter busbar

## Claims

1. A battery module comprising:
a battery cell laminate that is formed by stacking a plurality of battery cells; and
a busbar frame that covers at least one surface of the battery cell laminate, and on which at least two terminal busbars electrically connected to the battery cell laminate are mounted,
wherein the terminal busbar includes at least one combining slit for electrical connection with external configuration.

2. The battery module of claim 1, further comprising
a module frame that accommodate the battery cell lamination to which the busbar frame is combined and including an opening that exposes two lateral ends of the battery cell laminate in a length direction;
a pair of end plates, combined to the opening and including a terminal expose hole that is exposes the at least two terminal busbars,
wherein the terminal expose hole is provided in each of the pair of end plates.

3. The battery module of claim 2, wherein:
the terminal busbar is a positive terminal busbar and a negative terminal busbar, and
the positive terminal busbar and the negative terminal busbar are respectively arranged at the diagonal direction ends of an upper surface of a module frame assembly.

4. The battery module of claim 3, wherein:
the terminal expose hole is provided with one on each pair of end plates.

5. The battery module of claim 1, wherein:
the terminal busbar comprises a main body that is parallel to one side of the busbar frame and is fixed to the busbar frame, and a connection portion that extends vertically from an upper side of the main body, and
the combining slit is formed in the connection portion.

6. The battery module of claim 1, further comprising a sub-combining slit extending in a direction perpendicular to an extension direction of the combining slit.

7. A battery pack comprising:
a plurality of battery modules; and
a pack housing that accommodates the battery module,
wherein at least one of the plurality of battery module is the battery module of claim 1.

8. The battery pack of claim 7, comprising an inter busbar that electrically connects the terminal busbars of adjacent battery modules among the plurality of battery modules.

9. The battery pack of claim 8, wherein:
the inter busbar comprises a bar-shaped inter busbar body and an insulating member covering the remaining portion of the inter busbar body except for two lateral ends.

10. The battery pack of claim 9, wherein:
the two lateral ends of the inter busbar body are inserted into the combining slit of the battery module, respectively.

11. The battery pack of claim 9, further comprising an insulating finish that covers the two lateral ends and the combining slit while the two lateral ends are inserted into the combining slit.

12. The battery pack of claim 11, wherein:
the insulating finish contains heat-resistant silicone.

13. The battery pack of claim 7, wherein:
in at least one battery module among the plurality of battery modules,
the terminal busbar is a positive terminal busbar and a negative terminal busbar, and
the positive terminal busbar and the negative terminal busbar are respectively arranged at the diagonal direction ends of an upper surface of a module frame assembly.

14. The battery pack of claim 13, wherein:
the plurality of battery modules are arranged adjacently in the row direction and column direction, and
a plurality of inter busbars connecting the plurality of battery modules are arranged so as not to be adjacent to each other in the column direction.
